# EUROPEAN PATENT SPECIFICATION

(11) **EP 2 975 752 B1**
(45) Date of publication and mention of the grant of the patent: **13.03.2019**
(21) Application number: 13877841.0
(22) Date of filing: 14.03.2013
(51) Int. Cl.: H02M 7/48, H02M 7/515

(54) **CURRENT-SOURCE POWER CONVERSION APPARATUS**
LEISTUNGSUMWANDLUNGSVORRICHTUNG FÜR EINE STROMQUELLE
APPAREIL DE CONVERSION DE PUISSANCE DE SOURCE DE COURANT

(43) Date of publication of application: 20.01.2016
(73) Proprietor: Toshiba Mitsubishi-Electric Industrial Systems Corporation, Tokyo 104-0031 (JP)
(72) Inventor: KUROSAWA, Ryoichi, Tokyo 104-0031 (JP)
(74) Representative: Hoffmann Eitle
(86) International application number: PCT/JP2013/057262
(87) International publication number: WO 2014/141441

(56) References cited:
- WO-A1-2007/069314
- CH-A5- 673 731
- JP-A- S59 156 162

## Description

### TECHNICAL FIELD

This invention relates to a current source power conversion apparatus which converts from a DC power source to an AC power, or converts from an AC power source to a DC power, and more particularly relates to a current source power conversion apparatus in which a large capacity can be facilitated.

### BACKGROUND ART

A power conversion apparatus which converts from a DC power source to an AC power, or converts from an AC power source to a DC power is broadly classified into a voltage source power conversion apparatus and a current source power conversion apparatus.

A representative example of a current source power conversion apparatus is a load commutated inverter (also called a LCI). The fundamental configuration thereof is the same as a thyristor rectifying apparatus, and a synchronous motor is connected to AC terminals as an AC load, and a current of a thyristor which has been conducting is made zero and is turned off, by a load commutated function using an induced voltage of the synchronous motor. It has a simple structure, and a rate of change in current during commutation period is about 10 A/ps, that is 1/100, compared with that of a voltage source power conversion apparatus, and a large capacity (a high voltage, a large current) can be realized easily. But in the case that an induced voltage is low at a starting period or when the rotational speed is low, commutation cannot be carried out, so it is necessary to intermit DC current at a rectifier side, and thereby a torque pulsation is generated. In addition, a leading current phase is required in principle, and it is not possible to make a power factor 1, in which a voltage phase and a current phase are equal, and a load commutated inverter cannot be applied to an induction motor in which the current phase is lagging.

In contrast, a current source power conversion apparatus has been proposed which is added with a commutation auxiliary circuit obtained by combining a capacitor and self-turn-off devices used in a voltage type inverter, and has improved the commutation property at the time of light load.

### PRIOR ART DOCUMENT

### PATENT DOCUMENT

Patent Document 1: Japanese Patent Application Publication No. 2008-29118 (whole)

### SUMMARY OF THE INVENTION

### PROBLEM TO BE SOLVED BY THE INVENTION

The current type power conversion apparatus shown in Patent Document 1 has a configuration in which the above-described commutation auxiliary circuits are added to an output of a load commutated inverter. The commutation auxiliary circuit is provided between an output of each phase of the load commutated inverter and an input of each phase of a motor, and is composed of self-turn-off devices connected in antiparallel with each other and a capacitor connected in parallel with these self-turn-off devices. When this commutation auxiliary circuit is used, the charge and discharge of this capacitor is performed without waste at the time of commutation, and even if the induced voltage difference is negative, commutation is carried out by the action of the capacity voltage, and this is an excellent circuit configuration in principle. Accordingly it becomes possible to operate with a power factor 1.

However, when a large capacity (a high voltage, a large current) of this current source power conversion apparatus is realized, the capacity of the capacitor becomes large, and in addition, a floating inductance of about 1 pH which cannot be ignored is generated in a circuit loop formed by this capacitor and the reverse blocking self-turn-off devices, and a resonance phenomenon is generated in this loop circuit. When the resonance phenomenon like this is generated, not only the peak current resistant amount of the self-turn-off device becomes large, but also the circuit loss increases, to cause a decrease in efficiency.

The present invention is made in view of the above-described problem, and makes it an object to provide a current source power conversion apparatus which makes a resonance phenomenon not to be generated even if a floating inductance exists in a commutation auxiliary circuit.

### MEANS FOR SOLVING THE PROBLEM

In order to achieve the above-described object, a current source power conversion apparatus of the present invention is a current source power conversion apparatus according to the features of independent claim 1. Further preferred embodiments are defined in the dependent claims.

### EFFECTS OF THE INVENTION

According to the present invention, it is possible to provide a current source power conversion apparatus which makes a resonance phenomenon not to be generated even if a floating inductance exists in a commutation auxiliary circuit.

### BRIEF DESCRIPTION OF THE DRAWINGS

[Fig. 1] A circuit configuration diagram showing an embodiment of a current source power conversion apparatus according to this invention.
[Fig. 2] A diagram for explaining an operation of the current source power conversion apparatus according to this invention.
[Fig. 3] A diagram for explaining a blocking operation a resonance phenomenon according to this invention.
[Fig. 4] A diagram for explaining a resonance phenomenon in a comparative example.

### EMBODIMENTS TO PRACTICE THE INVENTION

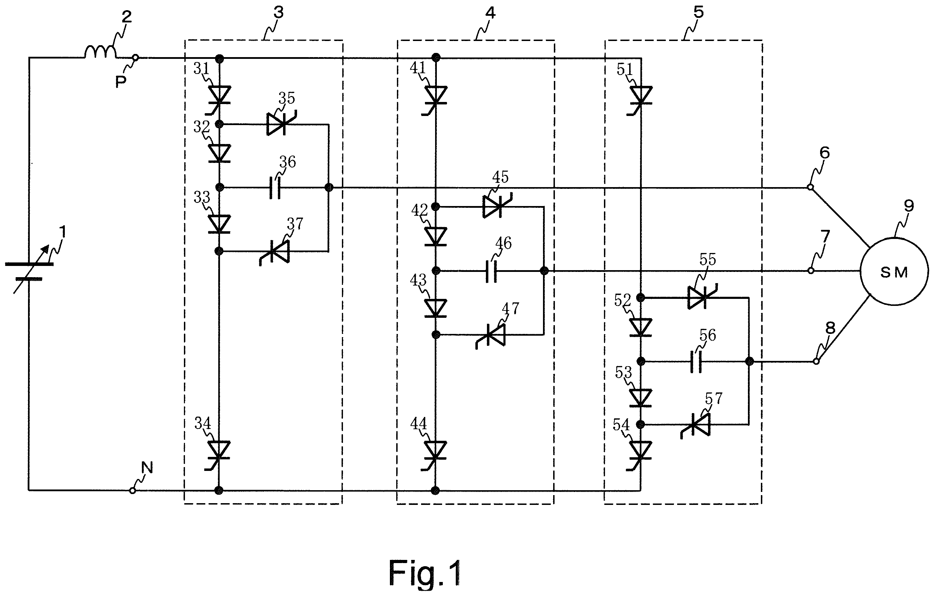

Fig. 1 is a circuit configuration diagram showing an embodiment of a current source power conversion apparatus according to the present invention. A DC current is supplied from a DC power source 1 to supply a variable DC voltage, between a DC positive terminal P and a DC negative terminal N of a current source power conversion apparatus, via a DC reactor 2 to smooth an output of this DC power source 1. The current source power conversion apparatus is composed of switching legs 3, 4 and 5 which are connected in parallel with each other between the DC positive terminal P and the DC negative terminal N. The switching legs 3, 4 and 5 have basically the same internal configuration, and each of them outputs an AC current for one phase. In this embodiment, since the number of output phases of the current source power conversion apparatus is three, the switching leg 3, the switching leg 4, the switching leg 5 respectively output AC currents of a U-phase, a V-phase, a W-phase, and these three switching legs compose an inverter. Hereinafter, the internal configuration of the switching leg 3 will be described.

A thyristor 31, a diode 32, a diode 33, a thyristor 34 are connected in series in the order, from the DC positive terminal P that is an output side of the DC reactor 2 toward the DC negative terminal N that is the negative electrode of the DC power source 1. Regarding the polarity of the connection, the anodes thereof are at the DC positive terminal P side that is the positive potential side, and the cathodes thereof are at the DC negative terminal N side that is the negative potential side, and this connection direction is defined as a forward direction. An anode of a reverse blocking self-turn-off device 35 is connected to a cathode of the thyristor 31, and a cathode of the reverse blocking self-turn-off device 35 is connected to an AC terminal 6 of the U-phase. That is, the reverse blocking self-turn-off device 35 is connected so that the AC terminal direction is the forward direction. A commutation auxiliary capacitor 36 is connected between a cathode of the diode 32 and the AC terminal 6. And, an anode of a reverse blocking self-turn-off device 37 is connected to an anode of the thyristor 34, and a cathode of the reverse blocking self-turn-off device 37 is connected to the AC terminal 6 of the U-phase. That is, the reverse blocking self-turn-off device 37 is connected so that the AC terminal direction is the reverse direction.

The switching leg 4 and the switching leg 5 have basically the same configuration as the switching leg 3. That is, thyristors 41, 51 correspond to the thyristor 31, diodes 42, 52 correspond to the diode 32, diodes 43, 53 correspond to the diode 33, thyristors 44, 54 correspond to the thyristor 34, reverse blocking self-turn-off devices 45, 55 correspond to the reverse blocking self-turn-off device 35, commutation auxiliary capacitors 46, 56 correspond to the commutation auxiliary capacitor 36, reverse blocking self-turn-off devices 47, 57 correspond to the reverse blocking self-turn-off device 37, respectively. And the switching leg 4 and the switching leg 5 supply AC output currents of the V-phase and the W-phase to AC terminals 7, 8, respectively.

Winding terminals of the U-phase, the V-phase, the W-phase of a synchronous motor 9 are connected to the AC terminals 6, 7 and 8, respectively. And gate control pulses of a 120-degree conducting type are given to the thyristors of the switching leg of each phase from a gate control circuit not shown, and thereby the current source power conversion apparatus drives the synchronous motor 9. In this case, basically the same gate control pulses as those of the positive side thyristors 31, 41, 51 are given to the positive side reverse blocking self-turn-off devices 35, 45, 55 of the respective switching legs. Similarly, basically the same gate control pulses as those of the negative side thyristors 34, 44, 54 are respectively given to the negative side reverse blocking self-turn-off devices 37, 47, 57.

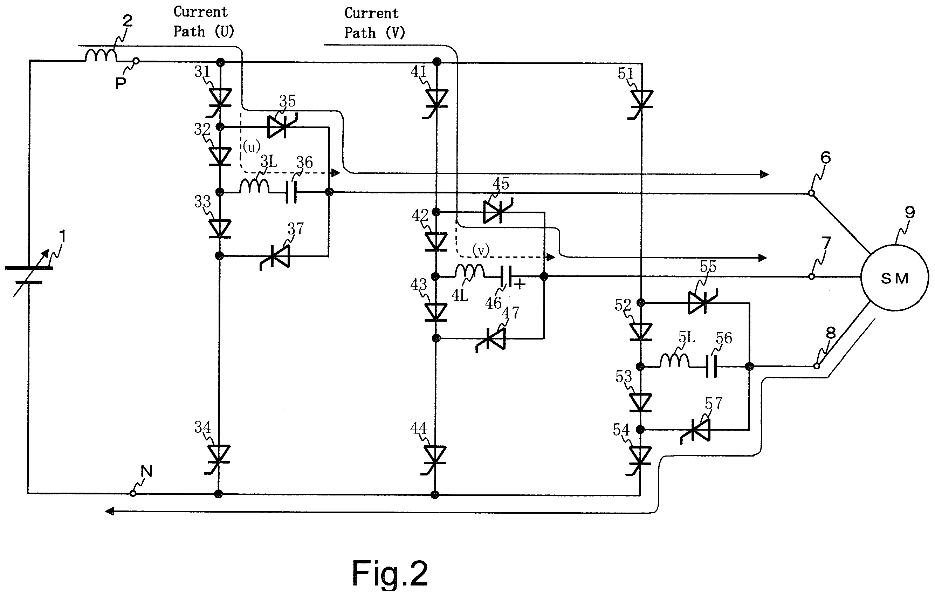

Fig. 2 is an explanation diagram for explaining an operation of the current source power conversion apparatus of the circuit configuration of Fig. 1. In Fig, 2, floating inductances 3L, 4L, 5L are respectively provided in series with the capacitors 36, 46, 56. These are inevitably generated inductances, when the large capacity (high voltage, large current) of the apparatus is realized. That is, when the large capacity of the apparatus is realized, the capacitance of the capacitor becomes large, and in addition, a floating inductance of about 1 µH which cannot be ignored is generated in a circuit loop formed by this capacitor and the reverse blocking self-turn-off device. The resonance phenomenon which is generated in this loop circuit will be described later.

To begin with, a fundamental commutation operation will be described with reference to Fig. 2. A state will be considered in which a loop current flows, as shown in a current path (U) shown in Fig. 2, from the DC power source 1, through the DC reactor 2, the DC positive terminal P, the thyristor 31, the reverse blocking self-turn-off device 35, the AC terminal 6, and from the U-phase to the W-phase of the synchronous motor 9, and through the AC terminal 8, the reverse blocking self-turn-off device 57, the thyristor 54, and the DC negative terminal N, to the DC power source 1. Though the reason will be described later, in this state, the capacitor 46 is charged + at the AC terminal side as shown in the drawing. A state that positive charges are charged at the electrode of the AC terminal side in this manner is defined to be charged in the positive side.

Here, it will be considered to commutate a current of the current path (U) which has been flowing from the thyristor 31 through the AC terminal 6 to the U-phase of the synchronous motor 9, so that a current flows from the thyristor 41 through the AC terminal 7 to the V-phase of the synchronous motor 9 as shown in a current path (V) . This is a commutation from the positive side U-phase to the positive side V-phase. To achieve the commutation, the thyristor 41 and the reverse blocking self-turn-off device 45 are to be turned on, and the reverse blocking self-turn-off device 35 is to be turned off. When the reverse blocking self-turn-off device 35 turns off, a current which has been flowing in the reverse blocking self-turn-off device 35 in the current path (U) comes to flow through the diode 32 and the capacitor 36, as shown in a current path (u) shown by a dashed line. Accordingly, the capacitor 36 is charged - at the AC terminal side, that is, in the negative side. In addition, since the thyristor 41 turns on, a current begins to flow through the capacitor 46 to the V-phase of the synchronous motor 9, as shown in a current path (v) shown by a dashed line. At this time, since a reverse voltage is applied to the reverse blocking self-turn-off device 45, a current does not flow therein yet. At the time point when the discharge of the capacitor 46 is completed, a forward voltage is applied to the reverse blocking self-turn-off device 45, and thereby a current begins to flow in the reverse blocking self-turn-off device 45. In this manner, the U-phase current which has been flowing in the current path (U) becomes zero, the thyristor 31 turns off, and the whole current from the DC power source 1 come to flow in the thyristor 41, in accordance with the current path (V) . A a series of the commutation operation is completed, in the state that the capacitor 46 is discharged to the zero voltage. Here, in the case that the synchronous motor 9 is operated with a leading power factor, when the above-described commutation operation is performed, the induced voltage of the synchronous motor 9, in addition to the voltage of the capacitor 46, come to operate as the commutation voltage.

The succeeding next commutation is the commutation from the negative W-phase to the negative U-phase, and in the commutation at this time, the above-described charged charges at the negative side of the capacitor 36 operate as the commutation voltage. At this time, the capacitor 56 is charged in the positive side. Considering the process of charge and discharge of the capacitor, corresponding to the repetition of the following same commutation operations, in the commutation operation from the positive side U-phase to the positive side V-phase which has been described firstly, since the commutation operation from the negative side V-phase to the negative side W-phase has be performed before that, it is found that the capacitor 46 is charged in the positive side as described above.

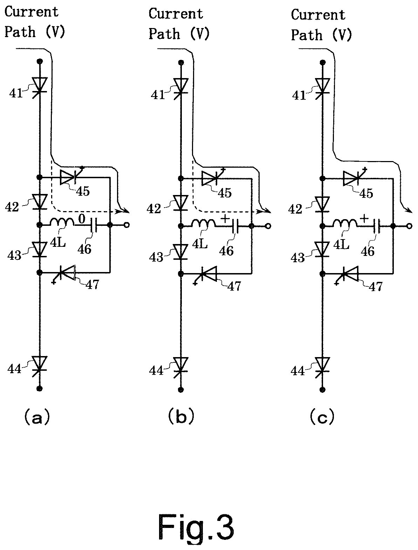

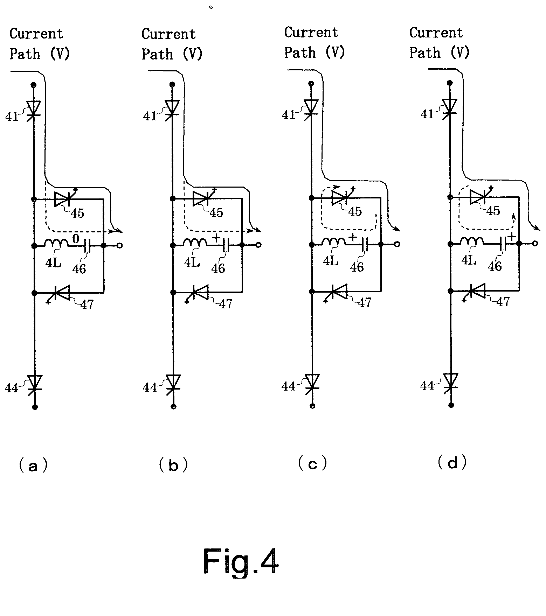

Next, the reason that the resonance phenomenon is not generated even though the floating inductance exists according to the present application will be described with reference to Fig. 3 and Fig. 4. Fig. 3 is a diagram for explaining a blocking operation of the resonance phenomenon according to this invention, and Fig. 4 is a diagram for explaining a resonance phenomenon in a comparative example, and the switching leg 4 of the V-phase is illustrated in each drawing.

When the commutation from the positive side U-phase to the positive side V-phase is performed, the current shown by a dashed line in Fig. 3(a) begins to flow as described above, and at the time point when the discharge of the capacitor 46 has been completed, a voltage to be applied to the reverse blocking self-turn-off device 45 becomes a forward voltage. At this time, the current which has been flowing in the capacitor 46 gradually transfers to the reverse blocking self-turn-off device 45, by the performance of the floating inductance 4L, the capacitor 46 comes to be charged in the reverse direction that is in the negative side as shown in Fig. 3(b) . When the current flowing in the capacitor 46 becomes zero, the voltage charged in the reverse direction is applied to the diode 42 as the reverse voltage, and thereby the discharge of the capacitor 46 is blocked. Accordingly, only the current path (V) shown by a continuous line in Fig. 3(c) remains after that. For this reason, even though the floating inductance 4L exists, the resonance phenomenon does not occur, and the current of the reverse blocking self-turn-off device 45 flows only by an amplitude I of the AC current. Further, the voltage charged in the capacitor 46 is further charged, when the reverse blocking self-turn-off device 47 turns off, and thereby comes to be effectively used at the time of the next commutation from the negative side U-phase to the negative side V-phase, that is from the thyristor 34 to the thyristor 44. Therefore, according to the present application, there is also another effect that the increase in the commutation inductance due to the floating inductance is eliminated. The above is the description when the commutation from the positive side U-phase to the positive side V-phase is performed, but the case of the commutation from the negative side U-phase to the negative side V-phase is also the same. In this case, the discharge of the charges charged in the capacitor 46 in the forward direction, that is in the positive side is blocked by the diode 43, and thereby the resonance phenomenon is suppressed.

Next, regarding a comparative example of a case in which the diodes 42 and 43 are not provided, the above-described resonance phenomenon will be described with reference to Fig. 4.

When the commutation from the positive side U-phase to the positive side V-phase is performed, a current I (Correspond to an amplitude of an AC current) which has been flowing in the capacitor 46 as shown by a dashed line in Fig. 4(a) gradually transfers to the reverse blocking self-turn-off device 45 by the operation of the floating inductance 4L, the capacitor 46 is charged in the reverse direction, that is in the negative side as shown in Fig. 4(b). This operation is the same as the case of the present application shown in Fig. 3(a), (b). However, when the diode 42 is not added, even when the current of the reverse blocking self-turn-off device 45 becomes equal to I, a current to discharge this charged voltage is added as shown in a dashed line of Fig. 4(c), and the current flowing in the reverse blocking self-turn-off device 45 increases up to about two times of I. And as shown in Fig. 4(d), the voltage of the capacitor 46 is inverted in due time, and the current is also inverted by the action of the inverted voltage. So a resonance phenomenon that the inversions of the voltage and current of the capacitor 46 are repeated in this manner is generated. Since a resistance component exists in a loop circuit which the capacitor 46, the floating inductance 4L and the reverse blocking self-turn-off device 45 compose, the resonance attenuates, but the attenuation rate is comparatively small. During this time, the current flowing in damped oscillation in positive and negative directions from the initial value I continues to flow in the capacitor 46, to cause the loss to be increased, and along with that the reverse blocking self-turn-off device 45 requires two times the peak current resistant amount, this will become a large defect. In Fig. 4, if the floating inductance 4L does not exist, at the time point when the discharge of the capacitor 46 has been completed, the reverse blocking self-turn-off device 45 immediately becomes a forward voltage, and the current I which has been flowing in the capacitor 46 come to instantly flow in the reverse blocking self-turn-off device 45. Accordingly, in this case, since the charging in the reverse direction as shown in Fig. 4(b) is not generated, the resonant phenomenon does not occur.

As described above, according to the present invention, it is possible to obtain a current source power conversion apparatus in which a large capacity (a high voltage, a large current) can be easily realized, and the same control can be used from a starting time to a high speed rotation time, and which has excellent property capable of dealing with from a leading current phase to a lagging current phase, and whose switching loss is small.

While certain embodiments of the present invention have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

For example, in the embodiment, as the reverse blocking self-turn-off device, a normal reverse conducting self-turn-off device may be used, or a reverse conducting self-turn-off device and a diode which are connected in series to realize the same property may be used. In addition, it has been described that the DC power source 1 is a variable voltage DC power source, so as to simplify the description, but a thyristor rectifier or a chopper power source which is usually used can be used.

In addition, it has been described in the embodiment that the three switching legs 3, 4, and 5 composes an inverter, and the AC load thereof is the three-phase synchronous motor 9, however not the synchronous motor but an induction motor may be used, and the number of the switching legs, that is the number of phases is not limited to three, but it is apparent that the apparatus can be realized with an optional plural number of the switching legs.

Generally, a motor can be operated also as a generator. The current source power conversion apparatus of the present invention can also perform a regenerative operation, and can be used as a current source power conversion apparatus from an AC to a DC. In this case, the AC terminal sides in Fig. 1 become the input, and the DC power source 1 is replaced by a DC load. In addition, as is carried out in a load commutated inverter that is a usual current source power conversion apparatus, an art to use a plurality of three-phase inverters by multiplexing can be applied completely similarly.

### DESCRIPTION OF THE SYMBOLS

1 DC power source
2 DC reactor
3, 4, 5 switching leg
6, 7, 8 AC terminal
9 synchronous motor
31, 34, 41, 44, 51, 54 thyristor
32, 33, 42, 43, 52, 53 diode
35, 37, 45, 47, 55, 57 reverse blocking self-turn-off device
3L, 4L, 5L floating inductance
P DC positive terminal
N DC negative terminal

## Claims

1. A current source power conversion apparatus in which N, where N is an integer not less than 2, switching legs (3, 4, 5) each having an AC terminal (6, 7, 8) are connected in parallel between a DC positive terminal (P) and a DC negative terminal (N), and which is arranged to perform power conversion between a DC and an N-phase AC;
the current source power conversion apparatus is **characterized in that**:
each switching leg (3, 4, 5) has a configuration in which;
a first thyristor (31, 41, 51), a first diode (32, 42, 52), a second diode (33, 43, 53), and a second thyristor (34, 44, 54) are connected in series **in that** order from the DC positive terminal side in a forward direction;
a first reverse blocking self-turn-off device (35, 45, 55) is connected between a connection point of the first thyristor (31, 41, 51) and the first diode (32, 42, 52) and the AC terminal (6, 7, 8), so that the AC terminal direction is a forward direction;
a capacitor (36, 46, 56) is connected between a connection point of the first diode (32, 42, 52) and the second diode (33, 43, 53) and the AC terminal (6, 7, 8); and
a second reverse blocking self-turn-off device (37, 47, 57) is connected between a connection point of the second diode (33, 43, 53) and the second thyristor (34, 44, 54) and the AC terminal (6, 7, 8), so that the AC terminal direction is a reverse direction.

2. A circuit comprising a current source power conversion apparatus as recited in Claim 1, further comprising a series circuit of a DC power source (1) of a variable voltage and a DC reactor (2) connected between the DC positive terminal (P) and the DC negative terminal (N), wherein the current source power conversion apparatus is arranged to output an AC of N phases.

3. A circuit as recited in claim 2, further comprising an AC machine (9) of N phases connected to the N AC terminals (6, 7, 8) .

4. A circuit comprising a current source power conversion apparatus as recited in Claim 1 and an AC machine (9) of N phases connected to the N AC terminals (6, 7, 8).

## Patentansprüche

1. Leistungsumwandlungseinrichtung für eine Stromquelle, bei der N Schaltzweige (3, 4, 5), wobei N eine ganze Zahl ist, die nicht kleiner als 2 ist, die jeweils einen Wechselstromanschluss (6, 7, 8) aufweisen, parallel zwischen einem positiven Gleichstromanschluss (P) und einem negativen Gleichstromanschluss (N) geschaltet sind, und die angeordnet ist, um eine Leistungsumwandlung zwischen einem Gleichstrom und einem N-Phasenwechselstrom durchzuführen;
wobei die Leistungsumwandlungseinrichtung für eine Stromquelle **dadurch gekennzeichnet ist, dass**:
jeder Schaltzweig (3, 4, 5) eine Konfiguration aufweist, in der;
ein erster Thyristor (31, 41, 51), eine erste Diode (32, 42, 52), eine zweite Diode (33, 43, 53) und ein zweiter Thyristor (34, 44, 54) in dieser Reihenfolge von der Seite des positiven Gleichstromanschlusses in einer Vorwärtsrichtung in Reihe geschaltet sind;
eine erste rückwärts sperrende Selbstabschaltungsvorrichtung (35, 45, 55) zwischen einem Verbindungspunkt des ersten Thyristors (31, 41, 51) und der ersten Diode (32, 42, 52) und dem Wechselstromanschluss (6, 7, 8) geschaltet ist, sodass die Wechselstromanschlussrichtung eine Vorwärtsrichtung ist;
ein Kondensator (36, 46, 56) zwischen einem Verbindungspunkt der ersten Diode (32, 42, 52) und der zweiten Diode (33, 43, 53) und dem Wechselstromanschluss (6, 7, 8) geschaltet ist; und
eine zweite rückwärts sperrende Selbstabschaltungsvorrichtung (37, 47, 57) zwischen einem Verbindungspunkt der zweiten Diode (33, 43, 53) und des zweiten Thyristors (34, 44, 54) und dem Wechselstromanschluss (6, 7, 8) geschaltet ist, sodass die Wechselstromanschlussrichtung eine Rückwärtsrichtung ist.

2. Schaltung, umfassend eine Leistungsumwandlungseinrichtung für eine Stromquelle nach Anspruch 1, weiter umfassend eine Reihenschaltung aus einer Gleichstromleistungsquelle (1) einer variablen Spannung und einer Gleichstromdrossel (2), die zwischen dem positiven Gleichstromanschluss (P) und dem negativen Gleichstromanschluss (N) geschaltet ist, wobei die Leistungsumwandlungseinrichtung für eine Stromquelle angeordnet ist, um einen Wechselstrom von N Phasen auszugeben.

3. Schaltung nach Anspruch 2, weiter umfassend eine Wechselstrommaschine (9) von N Phasen, die mit den N Wechselstromanschlüssen (6, 7, 8) verbunden ist.

4. Schaltung, umfassend eine Leistungsumwandlungseinrichtung für eine Stromquelle nach Anspruch 1 und eine Wechselstrommaschine (9) von N Phasen, die mit den N Wechselstromanschlüssen (6, 7, 8) verbunden ist.

## Revendications

1. Appareil de conversion de puissance de source de courant dans lequel N, où N est un entier qui n'est pas inférieur à 2, branches de commutation (3, 4, 5) ayant chacune une borne CA (6, 7, 8) sont connectées en parallèle entre une borne positive CC (P) et une borne négative CC (N), et qui est agencé pour effectuer une conversion de puissance entre un CC et un CA à N phases ;
l'appareil de conversion de puissance de source de courant étant **caractérisé en ce que** :
chaque branche de commutation (3, 4, 5) a une configuration dans laquelle :
un premier thyristor (31, 41, 51), une première diode (32, 42, 52), une seconde diode (33, 43, 53) et un second thyristor (34, 44, 54) sont connectés en série dans cet ordre depuis le côté de la borne positive CC dans un sens direct ;
un premier dispositif d'arrêt automatique par blocage inverse (35, 45, 55) est connecté entre un point de connexion du premier thyristor (31, 41, 51) et la première diode (32, 42, 52) et la borne CA (6, 7, 8) de sorte que le sens de la borne CA soit un sens direct ;
un condensateur (36, 46, 56) est connecté entre un pont de connexion de la première diode (32, 42, 52) et de la seconde diode (33, 43, 53) et la borne CA (6, 7, 8) ; et
un second dispositif d'arrêt automatique par blocage inverse (37, 47, 57) est connecté entre un point de connexion de la seconde diode (33, 43, 53) et du second thyristor (34, 44, 54) et la borne CA (6, 7, 8) de sorte que le sens de la borne CA soit un sens inverse.

2. Circuit comprenant un appareil de conversion de puissance de source de courant selon la revendication 1, comprenant en outre un circuit en série de la source de puissance CC (1) d'une tension variable et d'un réacteur CC (2) connecté entre la borne positive CC (P) et la borne négative CC (N), dans lequel l'appareil de conversion de puissance de source de courant est agencé pour délivrer un CA de N phases.

3. Circuit selon la revendication 2, comprenant en outre une machine CA (9) de N phases connectée aux N bornes CA (6, 7, 8).

4. Circuit comprenant un appareil de conversion de puissance de source de courant selon la revendication 1 et une machine CA (9) de N phases connectée aux N bornes CA (6, 7, 8).
